Europäisches Patentamt

European Patent Office

Office européen des brevets

Publication number: **0 317 059**
**A2**

## EUROPEAN PATENT APPLICATION

(21) Application number: 88308630.8

(22) Date of filing: 16.09.88

(51) Int. Cl.⁴ **H04M 11/08 , H04M 3/42**

(30) Priority: 17.11.87 GB 8726858

(43) Date of publication of application:
24.05.89 Bulletin 89/21

(84) Designated Contracting States:
**BE DE ES FR GR IT LU NL SE**

(71) Applicant: **GEC PLESSEY**
**TELECOMMUNICATIONS LIMITED**
**P.O. Box 53 Telephone Road**
**Coventry, CV3 1HJ(GB)**

(72) Inventor: **Chamberlain, Nigel**
**139 Hallam Way**
**West Hallam Derbyshire, DE7 6LP(GB)**

(74) Representative: **Lupton, Frederick**
**The Plessey Company plc Intellectual**
**Property Dept. Vicarage Lane**
**Ilford, Essex IG1 4AQ(GB)**

(54) **Private automatic branch exchanges.**

(57) A private automatic branch exchange (PABX) including a video receiver for receiving television broadcast signals, a decoder for decoding teletext signals present in the television signal, memory means for storing some or all of the teletext information, and control means for transmitting the stored teletext information through the PABX to one or more display terminals connected to the PABX.

EP 0 317 059 A2

## PRIVATE AUTOMATIC BRANCH EXCHANGES

This invention relates to Private Automatic Branch Exchanges (PABX).

A PABX is normally arranged in one or more cabinets containing shelves, each shelf carrying printed circuit boards for the various PABX functions. Typically, the PABX comprises a central processor unit for controlling call routing and timeslot switching for PCM voice signals, a services control function providing tone generation and detection facilities, and an interface control for providing required signal conversion and buffering to external entities such as analogue telephones, display terminals. Public Switched Telephone Network trunks, packet-switched networks, and other PABX'S.

It is also known to provide viewdata facilities in a PABX and viewdata terminals have been provided, with display screen telephone and modem, for making a connection through the PABX to the viewdata data base. Although such viewdata facilities function adequately, they do not take full advantage of the capabilities offered by a PABX for information retrieval facilities based on existing circuitry within the PABX.

The present invention recognizes that at most PABX sites, television receiver facilities are provided, and that the teletext information signal present in the television video signal may simply be decoded by circuitry provided in the PABX, in order that the teletext information may subsequently be disseminated via the PABX to any terminal connected to the PABX equipped with display facilities.

Accordingly in a first aspect the invention provides a Private Automatic Branch Exchange including a video receiver for receiving television broadcast signals. a decoder for decoding teletext signals present in the television signal, memory means for storing some or all of the teletext information, and control means for transmitting the stored teletext information through the PABX to one or more display terminals connected to the PABX.

Thus the present invention incorporates within a PABX a further facility for information retrieval by providing teletext displays to terminals connected to the PABX. It will be understood that teletext is an information broadcasting system in which pages of text and graphics are transmitted in coded form on unused television lines during the field interval.

If desired, the teletext information provided to the terminals may be selectively filtered in that only certain categories of teletext pages may be made available at any terminal.

In addition. a viewdata facility may be provided so that the PABX may route calls from a video terminal to the viewdata data base. A central memory store may be provided in the PABX so that selected pages of information may be held in the central store and accessed by video terminals connected to the PABX.

If desired a locally generated data base may be provided in addition to or as an alternative to the viewdata facility.

Accordingly the present invention provides in a second aspect a private automatic branch exchange including means for providing information to a memory store which is arranged to store the information as a data base in one or more pages of information, and control means for transmitting the information through the PABX to one or more display terminals connected to the PABX.

A preferred embodiment of the invention will now be described with reference to the accompanying drawings, wherein:-

Figure 1 is a block diagram of the essential elements of a teletext receiver implemented on a printed circuit board (PCB) of a PABX according to the invention;

Figure 2 is a block diagram of the teletext system architecture of the PABX, according to the invention;

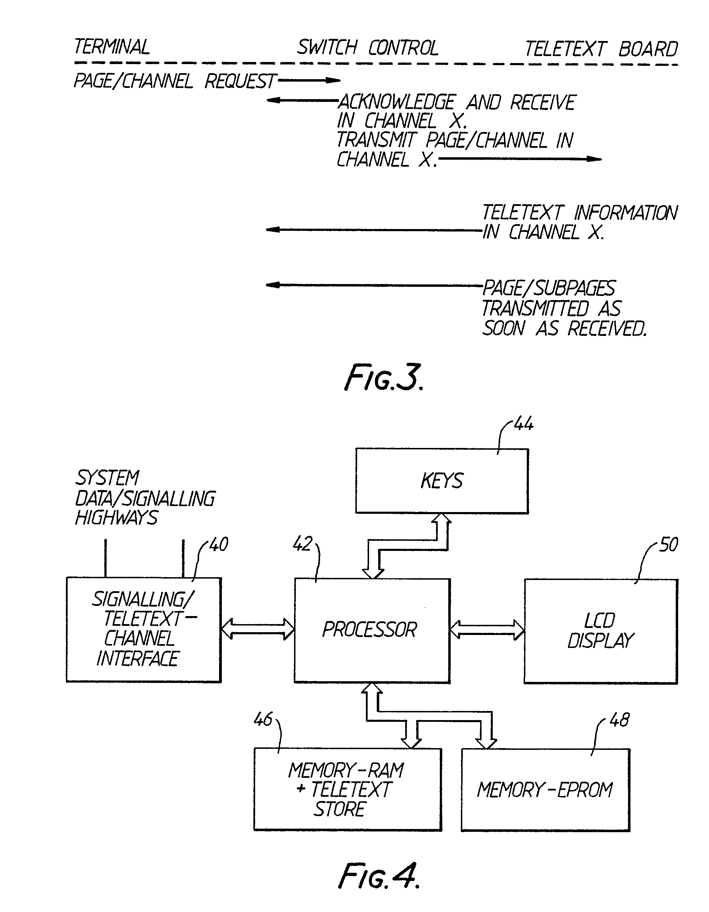

Figure 3 is a representation of the system protocol;

Figure 4 is a block diagram of a teletext terminal coupled to the PABX; and.

Figure 5 is a plan view of the keyboard and display of the terminal of figure 4.

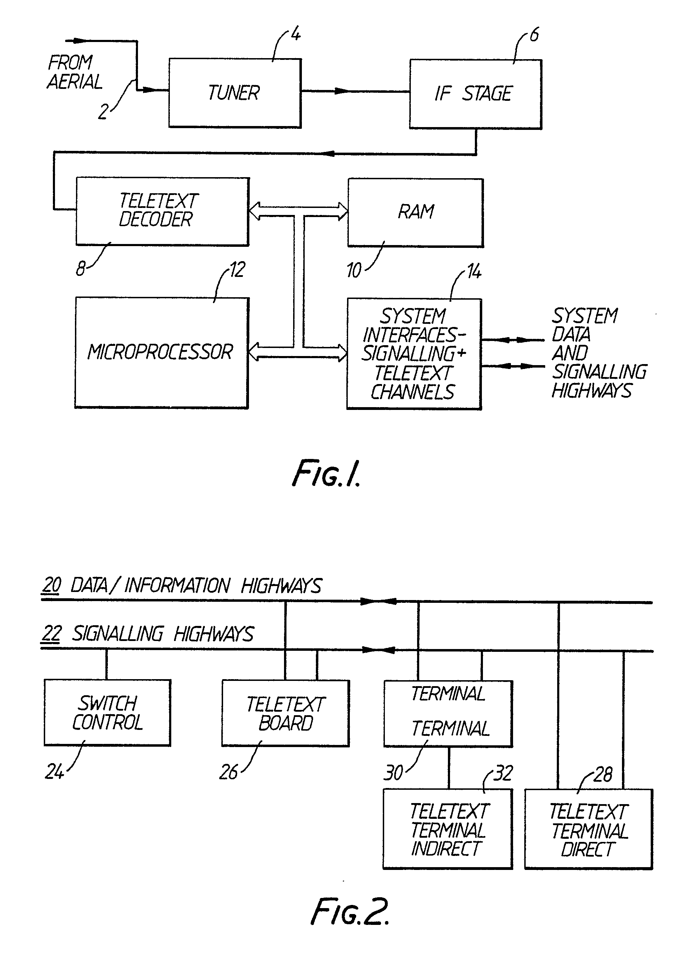

Referring to Figure 1, a PCB provided in a PABX has connected thereto the coaxial lead 2 from a television aerial terminated on the PCB, and a television receiver is provided comprising a tuner 4 and an IF stage 6 for processing the incoming video signals and providing teletext signals to a teletext decoder 8, which decodes the teletext signals and provides appropriate signals for storage in a memory RAM 10. The signals stored in the RAM 10 represent one or more magazines of information stored on a page-by-page basis. A microprocessor 12 is provided for controlling the decoder 8 and RAM 10, and also for controlling an interface 14 to the remainder of the PABX.

As regards storage. one UK implementation of teletext is made up of 8 magazines each containing 100 pages. There can be 3200 subpages associated with each page. Each page consists of 24 lines of 40 characters. Each character takes up 1 byte of storage. Various alternatives for the storage of this teletext information within the memory are possible:

1. To store all teletext pages and refresh as they are updated which requires a memory capacity of approximately 8x100x3200x24x40 bytes = 2560 mbytes.

2. If just the latest subpage associated with each page is stored a memory capacity of approximately 8x100x24x40 = 800 kbytes is required.

3. Alternatively just the page requested by the teletext terminal is captured when required.

Option 1 requires a large amount of memory which would require a large board area to implement fully. However in UK teletext there is not normally more than 20 subpages associated with each page. This would bring the memory capacity to a more reasonable 16 Mbytes. Option 3 would require the same memory as option 2 if 800 terminals requested different pages at once. Option 2 is regarded as the best option for storage of the teletext information.

Figure 2 shows a schematic of the teletext system architecture with data/information highways 20 and signalling highways 22. A PABX switch control 24 is connected to signalling highways 22 and the teletext PCB 26 of Figure 1 is coupled to both sets of highways 20, 22. A teletext terminal 28, to be described below, is connected to highways 20, 22 as is also a further terminal 30, to which, inter alia, a further teletext terminal 32 is connected.

The teletext information is routed over data highways 20 at 64 kbits$^{-1}$/16 kbits$^{-1}$. The signalling highways 22 employ an HDLC control protocol as shown in Figure 2 wherein a teletext terminal requesting information provides a request packet on bus 22. The switch control 24 receives the request, acknowledges the request in a request packet and instructs the terminal to receive the teletext information in a data channel X. The switch control also transmits a packet to board 26, instructing the board to transmit the required information in the assigned channel X. The required pages are transmitted in channel X as soon as they are received within board 26. 8 pages per second may be transmitted with a 64 kbits$^{-1}$ channel.

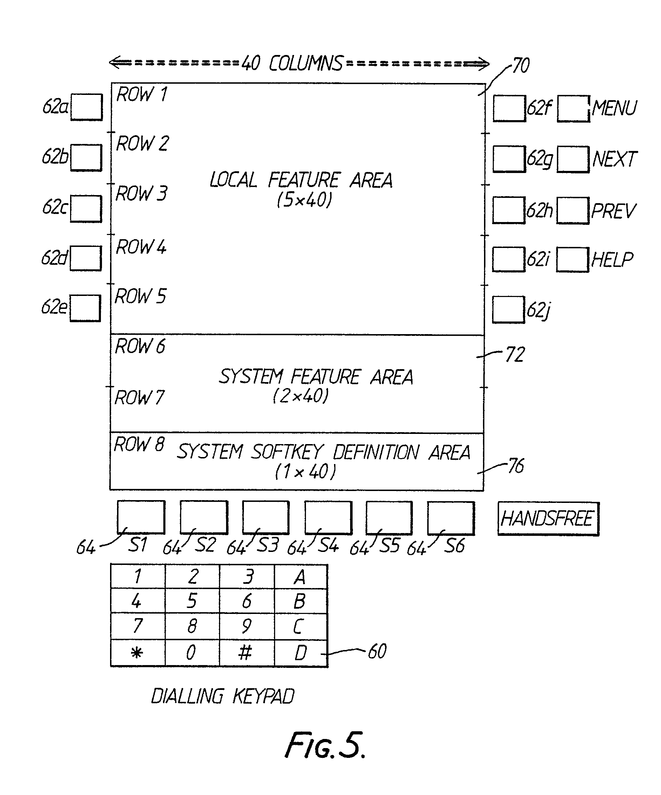

A terminal is shown in block-diagrammatic form in Figure 4 as comprising an interface 40 connected to the highways 20, 22, directly or via a standard data port (e.g. V24, V28, X21), for passing control information and teletext information. A control processor 42 is coupled to interface 40 as well as to a keyboard 44, a RAM memory 46 for storing teletext information and EPROM memory 48 for storing control routines. A liquid crystal display 50 is provided which may comprise one or more lines for displaying one or more teletext lines simultaneously.

In use, once the information arrives at the teletext terminal via the data highway interface 40 it is stored in memory 46 for subsequent display. The position of each character for display could be defined by transmission order or row, page addressing or delimiters. Once the connection is set up subpages, associated with the page selected, are automatically transmitted by the teletext board in the allocated channel as they arrive from the broadcast signal.

A liquid crystal display (lcd) 50 is used. A 24 line 40 character display allows the display of complete pages. Smaller line capacity displays would restrict the display to page fractions or rows but this disadvantage would be largely overcome using the scroll facility.

The Keys 44 allow the control of the display 50 and interact with the CPU 42 via the singalling highway 22 for data (teletext) requests. A preferred layout of keys and display is shown in figure 5. referring to figure 5, keys 44 comprise a standard telephone dialling keypad 60 and two sets of keys 62a - 62j and 64S1 - 64S6 which are 'soft keys' in the sense that their function is defined by software routines, and there function may be defined by the terminal subscriber. Display 50 comprises an 8 row X 40 column display with rows 1-5 forming an area 70 for display of text, and rows 6 and 7 forming an area 72 for display of information regarding the system, and row 8 forming an area 76 informing the subscriber of the function performed by depression of any of keys 62-64. In addition, keys MENU, NEXT and PREV (Previous) allow scrolling of the display. Keys HELP and HANDSFREE are also displayed. A default mode exists in which a key is defined as 'program'. On depression of this key the key definitions are indicated on the display.

Thus selection of keys 62 - 64 may allow the display of the rows, pages or subpages. Other keys may provide 'enlarge' display, 'scroll' display (either forward or back) (for example if a row is displayed then one may scroll to previous or next row; if half a page is displayed then one may scroll to next or previous half page etc.). A 'page scroll' allows the display of the next or previous subpage. A 'new page' scroll initiates a new page request to the switch control. Alternatively the 'scroll' key could be a soft key and dynamically assigned any of the scroll functions.

While the invention has been disclosed above in relation to a teletext information database. it is applicable to other forms of external information databases. The teletext decoder board could be adapted to store Viewdata information for example. The Tuner, IF stage, Teletext Decoder shown in Figure 1 would be replaced by a PSTN trunk interface, controlled by the microprocessor The information is routed through the system as described above. It provides customer cost savings and traffic advantages as only one trunk access is required.

A call could be made automatically to the relevant Viewdata access at regular intervals under processor control, for information refresh of the Viewdata Board Memory.

The advantages of this implementation are that only one trunk is utilised and even this is available for speech traffic the majority of the time. Further, there are obvious cost savings with this as only one trunk is required to serve all the subscribers who are connected to the PABX.

It is possible depending on the system configuration to restrict the type of information stored so that only certain information is made available to certain subscribers and also to restrict page information selection so that only certain pages are available to certain terminals.

It is also possible to employ the memory and associated control to store locally generated data. For example company news, product news could be routed to a terminal by depression of a specific "news request" key of the terminal.

Alternatively the information store may be used to hold messages both for and from each subscriber ie. the control software is adapted to that the memory is written to as well as read. Such messages are displayed in area 74. For example a subscriber on departure types on his display; 'back at time. date'; 'now on extension y', etc. This is then transmitted to the information store using a dedicated 'transmit' key. Alternatively the information is predefined and selected by continual pressing of a 'message' key. Once the required message is displayed another key(s) adds/edits the variable data. Pressing the 'transmit' key deposits that message in the associated subscribers information store.

When a subscriber makes a request to the switch control for the stored information relevant to another subscriber, for example when one is called and no answer, the 'information on subscriber x request' key is pressed - (defining x by soft key definition or alternatively making the request by typing an instruction on the display and transmitting to the switch control 'transmit key"). This is then sent to his terminal and displayed. He then deposits a message for the returning subscriber which is sent to the latter on him pressing the 'any messages key'.

## Claims

1. A private automatic branch exchange (PABX) including means for providing information to a memory store which is arranged to store the information as a data base in one or more pages of information, and control means for transmitting the information through the PABX to one or more display terminals connected thereto.

2. An exchange as claimed in claim 1 wherein said information providing means comprises a teletext decoder or viewdata access facility.

3. A private automatic branch exchange (PABX) including a video receiver for receiving television broadcast signals. a decoder for decoding teletext signals present in the television signal. memory means for storing some or all of the teletext information, and control means for transmitting the stored teletext information through the PABX to one or more display terminals connected to the PABX.

4. An exchange as claimed in claim 3 wherein the PABX includes a printed circuit board having the aforesaid elements of the PABX mounted thereon and wherein a television aerial lead is connected to said video receiver.

5. An exchange as claimed in claim 4 wherein the PABX comprises a data highway and a signalling highway across which signalling information flows in an HLDC control format. the highways being coupled to a PABX switch control unit, said printed circuit board, and one or more video terminal units adapted to receive and display teletext information.

6. An exchange as claimed in any of claims 3. 4, or 5 wherein the or each display terminal comprises an interface means coupled to receive control and teletext information, a central processor coupled to receive the information and store the teletext information in RAM, a keyboard coupled to the processor for accessing control routines stored in ROM, and a liquid crystal display for displacing simultaneously one or more lines of the teletext information.

7. An exchange as claimed in claim 1 or 2 wherein the memory store is adapted to receive locally generated information.

8. An exchange as claimed in claim 7 wherein the or each terminal has means for writing message information to the memory store.

9. A PABX substantially as described with reference to the accompanying drawings.

FROM AERIAL → TUNER (4) → IF STAGE (6)

TELETEXT DECODER (8) ⇄ RAM (10)

MICROPROCESSOR (12)

SYSTEM INTERFACES- SIGNALLING + TELETEXT CHANNELS (14) → SYSTEM DATA AND SIGNALLING HIGHWAYS

*FIG. 1.*

20 DATA / INFORMATION HIGHWAYS

22 SIGNALLING HIGHWAYS

SWITCH CONTROL (24)

TELETEXT BOARD (26)

TERMINAL TERMINAL (30)

TELETEXT TERMINAL INDIRECT (32)

TELETEXT TERMINAL DIRECT (28)

*FIG. 2.*

TERMINAL                    SWITCH CONTROL              TELETEXT BOARD

PAGE/CHANNEL REQUEST

ACKNOWLEDGE AND RECEIVE
IN CHANNEL X.
TRANSMIT PAGE/CHANNEL IN
CHANNEL X.

TELETEXT INFORMATION
IN CHANNEL X.

PAGE/SUBPAGES
TRANSMITTED AS
SOON AS RECEIVED.

*FIG.3.*

SYSTEM
DATA/SIGNALLING
HIGHWAYS

KEYS 44

SIGNALLING/
TELETEXT-
CHANNEL
INTERFACE 40

PROCESSOR 42

LCD
DISPLAY 50

MEMORY-RAM
+ TELETEXT
STORE 46

MEMORY-EPROM 48

*FIG.4.*

FIG.5.